## Europäisches Patentamt
## European Patent Office
## Office européen des brevets

(19)

(11) Veröffentlichungsnummer: **0 194 965**
**B1**

(12) **EUROPÄISCHE PATENTSCHRIFT**

(45) Veröffentlichungstag der Patentschrift:
30.05.90

(51) Int. Cl.⁵: **F16B 45/00**

(21) Anmeldenummer: **86730046.9**

(22) Anmeldetag: **14.03.86**

(54) **Anschlussvorrichtung für Anschlagmittel.**

(30) Priorität: **15.03.85 DE 3509877**

(43) Veröffentlichungstag der Anmeldung:
**17.09.86 Patentblatt 86/38**

(45) Bekanntmachung des Hinweises auf die Patenterteilung:
**30.05.90 Patentblatt 90/22**

(84) Benannte Vertragsstaaten:
**AT GB IT SE**

(56) Entgegenhaltungen:
**DE-U- 8 301 591
DE-U- 8 428 646
FR-A- 1 534 833
GB-A- 785 300
GB-A- 874 722
GB-A- 963 699
US-A- 3 232 651**

(73) Patentinhaber: **RUD-Kettenfabrik Rieger & Dietz GmbH u. Co., Friedensinsel, D-7080 Aalen 1(DE)**

(72) Erfinder: **Smetz, Reinhard, Ing. grad. (FH), Silcherstrasse 17, D-8860 Baldingen(DE)**
Erfinder: **Speich, Helmut, Filderweg 26, D-7081 Hüttlingen(DE)**

(74) Vertreter: **Böning, Manfred, Dr. Ing. et al, Patentanwälte Dipl.-Ing. Dieter Jander Dr. Ing. Manfred Böning Kurfürstendamm 66, D-1000 Berlin 15(DE)**

ACTORUM AG

## Beschreibung

Die Erfindung betrifft eine Anschlußvorrichtung nach dem Oberbegriff des Patentanspruches 1.

Aus der DE-U 8 428 646 ist eine Anschlußvorrichtung der in Betracht gezogenen Art bekannt, die neben einem Befestigungsteil und einem Anschlußteil ein Verbindungsteil aufweist. Bei dieser Vorrichtung formen die drei vorgenannten Teile eine durch die Klemmfeder zusammengehaltene Einheit, die durch das als Schraubbolzen ausgebildete Befestigungsteil am jeweils mit dem Anschlagmittel zu verbindenden Gegenstand anbringbar ist. Die bekannte Vorrichtung bietet den Vorteil, daß sich ihr Verbindungsteil gegenüber dem Befestigungsteil drehen kann und sich ihr Anschlußteil folglich optimal an unterschiedliche Kraftangriffsrichtungen des Anschlagmittels anpassen kann. Diesem Vorteil stehen allerdings aus der vergleichsweise komplizierten Form des zusätzlichen Verbindungsteiles, und der Notwendigkeit der Anbringung von Gewindebohrungen am jeweiligen Gegenstand resultierende kostenmäßige Nachteile gegenüber.

Bekannt ist außerdem aus der DE-C 3 301 960 eine an ein Fahrzeug od.dgl. anschweißbare Anschlußvorrichtung, bei der ein mit seitlichen Schwenkzapfen versehenes Anschlußteil durch zwei die Schwenkzapfen umfassende Befestigungsteile gehalten wird. Diese Vorrichtung vermag deshalb nicht voll zu befriedigen, weil die sie bildenden Teile vor der Anbringung an ein Fahrzeug od.dgl. keine Einheit bilden und weil die Klemmfeder, die das Anschlußteil in die Befestigungsteile drückt, das Anschweißen des zweiten Befestigungsteiles behindert. Hinzu kommt, daß aus Festigkeitsgründen eine dreiseitige Schweißung der kappenförmig ausgebildeten Befestigungsteile erforderlich ist.

Der Erfindung liegt die Aufgabe zugrunde, eine Vorrichtung der in Betracht gezogenen Gattung derart weiterzuentwickeln, daß ihre einfach ausgebildeten Teile wie bei der zweiten bekannten Anschlußvorrichtung durch Schweißen mit dem jeweiligen Gegenstand verbunden werden können, wobei eine korrosionsunempfindliche Schweißung angestrebt wird. Diese Aufgabe wird erfindungsgemäß durch die Lehre des Patentanspruches 1 gelöst.

Vorteilhafte Weiterbildungen des Patentgegenstandes sind den Unteransprüchen zu entnehmen.

Die erfindungsgemäß ausgebildete Vorrichtung bietet den Vorteil, daß bei ihr die Klemmfeder nicht nur zum Zusammenhalten der Vorrichtungsteile vor der Montage dient, sondern auch das Anschweißen der Vorrichtung am jeweiligen Gegenstand erleichtert. Die Wurzelschweißung erweist sich dabei aus korrosionstechnischen Gründen als besonders vorteilhaft.

Eine bevorzugte Ausführungsform der Erfindung wird im folgenden anhand der beigefügten Zeichnung näher erläutert. Es zeigen:

Fig. 1 teilweise im Schnitt die Vorderansicht einer Anschlußvorrichtung;

Fig. 2 teilweise im Schnitt die Seitenansicht der Anschlußvorrichtung gemäß Fig. 1 und

Fig. 3 eine Teildraufsicht auf die Anschlußvorrichtung gemäß Fig. 1 und 2.

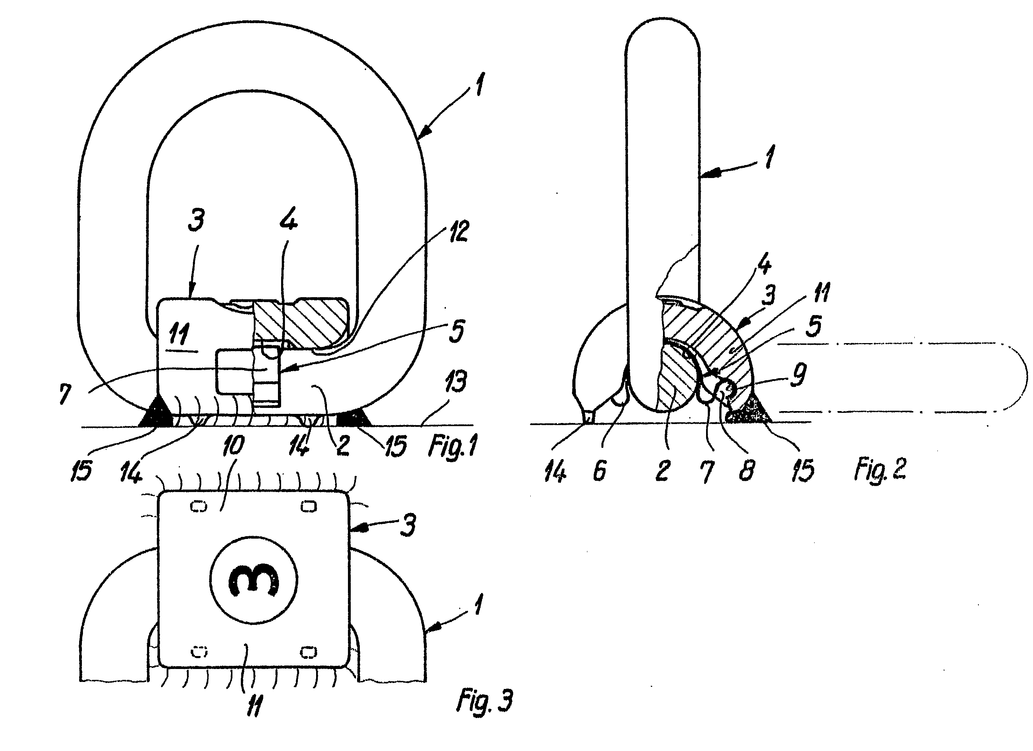

In den Figuren ist 1 ein ösenförmiges Anschlußteil, dessen eine Schwenkachse bildender gerader Abschnitt 2 schwenkbar in einem Befestigungsteil 3 gelagert ist. Wie aus Fig. 2 erkennbar ist, hat das Befestigungsteil 3 im wesentlichen die Form eines auf dem Kopf stehenden U. In der Mitte des Befestigungsteiles 3 ist eine Aufnahmenut 4 für eine Klemmfeder 5 vorgesehen. Die Klemmfeder 5 weist Halteschenkel 6 und 7 auf, deren Enden 8 nach Art offener Scharnierfalze gebogen sind. Zur Verankerung der Enden 8 der Halteschenkel 6 und 7 im Befestigungsteil 3 dienen Rastnuten 9 an den Innenwänden der Schenkel 10 und 11 des Befestigungsteiles 3.

Die Klemmfeder 5 hat im wesentlichen die Form eines Ω. Aufgrund dieser Form verbindet sie nicht nur das Anschlußteil 1 mit den Befestigungsteilen 3 zu einer Einheit, sondern sie drückt den geraden Abschnitt 2 des Anschlußteiles 1 darüberhinaus gegen Stützflächen 12 des Befestigungsteiles 3, die sich beidseits der Aufnahmenut 4 befinden.

Um eine gute Schweißverbindung zwischen dem Befestigungsteil 3 und einer für dessen Anbringung vorgesehenen Fläche 13 sicherzustellen, ist das Befestigungsteil 3 mit warzenförmigen Distanznocken 14 versehen, die seinen Hauptteil in einem Abstand von etwa 2 mm von der Fläche 13 halten. Die Distanznocken 14 ermöglichen die Durchführung einer Wurzelschweißung, welche sich aus korrosionstechnischen Gründen als besonders vorteilhaft erweist. Beim Schweißen schmelzen die eine Lehre bildenden Distanznocken weg. Durch die aus den Figuren erkennbare Form der Schweißnähte 15 wird die Bildung von Spalten, die die Korrosionsgefahr erhöhen, verhindert.

## Patentansprüche

1. Anschlußvorrichtung für Anschlagmittel mit einem Befestigungsteil (3) zum Befestigen der Vorrichtung an einem Fahrzeug, einem zu transportierenden Gegenstand od. dgl. und einem ösenförmigen Anschlußteil (1) zum Anschließen des Anschlagmittels, wobei das Befestigungsteil (3) ein Lager für das um eine Schwenkachse schwenkbare Anschlußteil (1) bildet und zur Arretierung des Anschlußteiles (1) in unterschiedlichen Positionen eine Klemmfeder (5) dient, wobei die Klemmfeder (5) mit ihren Enden in Rastnuten (9) des Befestigungsteiles (3) greifende Halteschenkel (6, 7) zum Zusammenhalten des Befestigungsteiles (3) und des Anschlußteiles (1) aufweist und wobei die Schwenkachse von einem geraden Abschnitt des Anschlußteiles (1) gebildet wird, den die Klemmfeder (5) bei in die Rastnuten (9) eingerasteten Halteschenkeln bügelartig umfaßt, dadurch gekennzeichnet, daß an den jeweils mit dem Anschlagmittel zu verbindenden Gegenstand anschweißbare einteilige Befestigungsteil (3) U-förmig ausgebildet ist, daß an den Innenseiten seiner Schenkel (10, 11) die sich gegenüberliegenden Rastnuten (9) für die Enden (8) der Halteschenkel (6, 7) der Klemmfeder (5) angeordnet sind und daß die Stirnflächen der Halteschenkel (6, 7) mit eine Wurzelschweißung ermöglichenden, warzenförmigen Distanznocken (14) versehen sind.

2. Vorrichtung nach Anspruch 1, dadurch gekennzeichnet, daß die Klemmfeder (5) im wesentlichen Ω-förmig ausgebildet ist.

3. Vorrichtung nach Anspruch 1 oder 2, dadurch gekennzeichnet, daß die Enden (8) der federnden Halteschenkel (6, 7) der Klemmfeder (5) scharnierfalzartig gebogen sind.

4. Vorrichtung nach einem der Ansprüche 1 bis 3, dadurch gekennzeichnet, daß die Klemmfeder (5) Teile des die Schwenkachse bildenden Abschnittes (2) des Anschlußteiles (1) gegen Stützflächen (12) des Befestigungsteiles (3) drückt.

5. Vorrichtung nach einem der Ansprüche 1 bis 4, dadurch gekennzeichnet, daß das Befestigungsteil (3) im Bereich der Klemmfeder (5) mit einer Aufnahmenut (4) für letztere versehen ist.

## Claims

1. A joining device for detent means having a fastening part (3) for fastening the device on a vehicle, an article to be transported or the like, and a joining part (1) of eye form for joining the detent means, where the fastening part (3) forms a bearing for the joining part (1) pivotable about a pivot axis and, for the arresting of the joining part (1) in various positions, there serves a clamping spring (5), the clamping spring (5) comprising retaining legs (6, 7) engaging with their ends in detent grooves (9) of the fastening part (3) for holding together the fastening part (3) and the joining part (1), while the pivot axis is formed by a straight section of the joining part (1) which the clamp spring (5) embraces in strap manner when the retaining legs are engaged in the detent grooves (9), characterised in that the one-piece fastening part (3) weldable to the article to be connected in each case with the detent means is made in U-form, in that on the inner sides of its legs (10, 11) the mutually-opposite detent grooves (9) for the ends (8) of the retaining legs (6, 7) of the clamp spring (5) are arranged and in that the end faces of the retaining legs (6, 7) are provided with distance dogs (14) of nipple form which render possible a root welding.

2. A device according to Claim 1, characterised in that the clamp spring (5) is made substantially in Ω-form.

3. A device according to Claim 1 or 2, characterised in that the ends (8) of the resilient retaining legs (6, 7) of the clamp spring (5) are bent in hinge recess manner.

4. A device according to any one of Claims 1 to 3, characterised in that the clamp spring (5) presses parts of the section (2) of the detent part (1) which forms the pivot axis (1) against support faces (12) of the fastening part (3).

5. A device according to any one of Claims 1 to 4, characterised in that the fastening part (3) is provided in the region of the clamp spring (5) with a reception groove (4) for the latter.

## Revendications

1. Dispositif de raccordement pour organe de butée comportant une pièce de fixation (3) destinée à fixer le dispositif sur un véhicule, un objet à transporter ou analogue et une pièce de raccordement (1) en forme de boucle destinée au raccordement de l'organe de butée, dans lequel la pièce de fixation (3) constitue un palier pour la pièce de raccordement (1) mobile en rotation autour d'un axe de pivotement et, pour le blocage de la pièce de raccordement (1) dans différentes positions, on utilise un ressort de friction (5), qui présente des branches de maintien (6, 7) qui s'accrochent par leurs extrémités dans des encoches de blocage (9) de la pièce de fixation (3) en vue de solidariser la pièce de fixation (3) et la pièce de raccordement (1) et dans lequel l'axe de pivotement est constitué par une section droite de la pièce de raccordement (1) que le ressort de friction (5) entoure à la manière d'un étrier lorsque les branches de maintien sont accrochées dans les encoches de blocage (9), caractérisé en ce que la pièce de fixation (3) que l'on peut souder de manière solidaire avec l'objet à relier avec l'organe de butée est conformée en forme de U, en ce que les encoches de blocage (9) destinées aux extrémités (8) des branches de maintien (6, 7) du ressort de friction (5) et qui sont opposées l'une à l'autre sont disposées sur les côtés intérieurs de sa branche (10, 11) et en ce que les faces frontales des branches de maintien (6, 7) sont munies de parties saillantes (14) d'écartement en forme de bossages qui permettent une soudure en racine.

2. Dispositif selon la revendication 1, caractérisé en ce que le ressort de friction (5) est essentiellement conformé en forme de Ω.

3. Dispositif selon la revendication 1 ou 2, caractérisé en ce que les extrémités (8) des branches de maintien (6, 7) à ressorts du ressort de friction sont courbées en forme d'agrafes de charnière.

4. Dispositif selon l'une des revendications 1 à 3, caractérisé en ce que le ressort de friction (5) appuie des parties de la section (2) de la pièce de raccordement (1) formant l'axe de pivotement contre des surfaces d'appui (12) de la pièce de fixation (3).

5. Dispositif selon l'une des revendications 1 à 4, caractérisé en ce que, dans la zone du ressort de friction (5), la pièce de fixation (3) est munie d'une encoche de réception (4) pour ledit ressort.

Fig. 1

Fig. 2

Fig. 3